# EUROPÄISCHE PATENTSCHRIFT

(11) **EP 1 483 361 B1**
(45) Veröffentlichungstag und Bekanntmachung des Hinweises auf die Patenterteilung: **05.05.2010**
(21) Anmeldenummer: 02722210.8
(22) Anmeldetag: 13.03.2002
(51) Int. Cl.: C11D 1/835, C11D 3/39, C11D 1/14

(54) **VERDICKTE PEROXIDLÖSUNGEN**
CONCENTRATED PEROXIDE SOLUTIONS
SOLUTIONS DE PEROXYDE EPAISSIES

(43) Veröffentlichungstag der Anmeldung: 08.12.2004
(73) Patentinhaber: Cognis IP Management GmbH, 40589 Düsseldorf (DE)
(72) Erfinder: BONASTRE GILABERT, Nuria, E-08210 Barbera del Vall (ES); SANCHEZ, Agustin, E-08921 Santa Coloma de Gramenet (ES)
(86) Internationale Anmeldenummer: PCT/EP2002/002736
(87) Internationale Veröffentlichungsnummer: WO 2003/076559

(56) Entgegenhaltungen:
- WO-A-95/08611
- WO-A-99/19431
- DE-A- 10 032 589
- DE-A- 19 623 571
- GB-A- 1 443 244

## Beschreibung

### Gebiet der Erfindung

Die Erfindung befindet sich auf dem Gebiet der Wasch- und Reinigungsmittel für harte Oberflächen, speziell der wässrigen Peroxidlaugen und betrifft neue transparente Zubereitungen mit erhöhter Viskosität.

### Stand der Technik

In der Vergangenheit haben sich sowohl in den Bereichen Hygiene und Desinfektion als auch der Reinigung von Textilien solche Bleichmittel auf der Grundlage von Wasserstoffperoxid bewährt, die über eine bemerkenswerte Viskosität verfügen und sich daher einerseits für die Behandlung horizontaler, geneigter und vor allem vertikaler Oberflächen und andererseits für die spezielle Fleckentfernung auf Textilien eignen. Die Viskosität dieser Mittel bewirkt, dass die Kontaktzeit zwischen diesen und den zu behandelnden Oberflächen wesentlich größer ist als bei handelsüblichen Flüssigprodukten, die rasch von der Oberfläche abfließen bzw. im Fall der Textilien in sie eindringen und sich dabei verteilen.

Aus dem Stand der Technik sind eine Reihe von Bleich- und Reinigungsmitteln bekannt, die eine solch gewünschte hohe Viskosität aufweisen. Aus der Deutschen Offenlegungsschrift DE-OS 15 67 570. (Henkel) sind beispielsweise flüssige oder pastenförmige, Aktivsauerstoff enthaltende Konzentrate bekannt, die man durch Umsetzung von Phosporpentoxid mit niedermolekularen Alkoholen und Wasserstoffperoxid erhält. In der Deutschen Patentanmeldung DE 4202720 A1 (Henkel) werden Formulierungen zum gleichzeitigen Entschlichten, Abkochen und Bleichen von cellulosehaltigen Textilmaterialien beschrieben, die anionische Tenside, ethoxylierte Fettalkohole und Wasserstoffperoxid enthalten. Die Mittel sind jedoch für die Reinigung harter Oberflächen ungeeignet. Gemäß der Deutschen Offenlegungsschrift DE 4418847 A1 (Henkel) lassen sich viskose Bleichmittel durch Zugabe von Fettalkoholpolyglycolethem und ethoxylierten Phosphorsäureestern zu Wasserstoffperoxidlösungen herstellen. Des weiteren sei auf die Druckschriften EP 0829532 A1**,** EP 0916721 A1**,** EP 1010749 A1 sowie WO 98111189 (Procter & Gamble) verwiesen, aus der flüssige Bleichmittel auf Basis von Peroxiden bekannt sind, welche nichtionische Tenside, speziell Aminoxide enthalten. Die Verwendung von tensidischen Gemischen aus Fettsäurealkanolamiden, Alkylethersulfaben und Alkyletherphosphaten zur Verdickung von wässrigen Peroxidlösungen ist ferner Gegenstand der Deutschen Patentschrift DE 19623571 C2 (Henkel). Schließlich werden in der WO 99/019431 (Unilever) saure Reinigungsmittel vorgeschlagen, die ethoxylierte Fettamine zusammen mit anionischen Tensiden enthalten.

Trotz des umfangreichen Stands der Technik, der an dieser Stelle nur exemplarisch wiedergegeben werden kann, sind die Produkte des Marktes im Hinblick auf ihr Leistungsvermögen nach wie vor nicht völlig zufrieden stellend: Die Viskosität ist entweder zu hoch oder zu niedrig und verändert sich im Laufe der Lagerung, die Tensidkomponente ist gegenüber Aktivsauerstoff nicht ausreichend stabil, gelöster Schmutz wird wieder auf der Oberfläche redeponiert und lässt diese stumpf erscheinen, die anfangs transparenten Zubereitungen trüben in Abhängigkeit von Lagerzeit und Lagertemperatur ein und schließlich lassen sich Parfümstoffe nicht stabil einarbeiten.

Die komplexe Aufgabe der Erfindung hat daher darin bestanden, neue Peroxidlösungen sowohl für die Reinigung harter Oberflächen als auch für die Bleiche von Textilien zur Verfügung zu stellen, die im Bereich von 5 bis 40 °C über eine Lagerzeit von wenigstens 4 Wochen eine Viskosität nach Brookfield (Spindel 1, 104 Upm) von wenigstens 150, vorzugsweise von 150 bis 500 mPas aufweisen. Die Formulierungen sollten chemisch stabil sein, d.h. sich nicht infolge von Reaktionen zwischen dem Oxidationsmittel Wasserstoffperoxid und anderen Inhaltsstoffen verändern, die stabile Einarbeitung von Parfüm- und Farbstoffen sicherstellen und dabei transparent erscheinen.

### Beschreibung der Erfindung

Gegenstand der Erfindung sind verdickte wässrige Peroxidlösungen, enthaltend
(a) Wasserstoffperoxid,
(b) alkoxylierte Fettamine und
(c) Alkylsulfate.

Überraschenderweise wurde gefunden, dass die unter Verwendung von Gemischen aus alkoxylierten Fettaminen und Alkylsulfaten erhaltenen Peroxidlösungen das komplexe Anforderungsprofil im Vergleich zu den Produkten des Stands der Technik weitaus besser erfüllen.

Insbesondere wird sowohl bei niedrigen als auch höheren Temperaturen eine ausreichende, aber nicht zu hohe Viskosität von 150 bis 500 mPas erzielt, die sich über die Lagerzeit praktisch nicht verändert. Die Tensidkombination erweist sich gegenüber der Peroxidquelle als oxidationsstabil und erleichtert die stabile Einarbeitung von Parfüm- und Farbstoffen. Ein besonderes Kennzeichen der Formulierungen besteht darin, dass sie unabhängig von Lagerzeit und Lagertemperatur ein transparentes Erscheinungsbild besitzen. Diese vorteilhaften Eigenschaften werden durch die Gegenwart von vorzugsweise kurzkettigen verzweigten Alkylsulfaten und/oder organischen Phosphonsäuren noch weiter verbessert.

### Wasserstoffperoxid

Das als Komponente (a) verwendete Wasserstoffperoxid wird üblicherweise als wässrige, etwa 30 bis 35 Gew.-%ige Lösung eingesetzt.

### Alkoxylierte Fettamine

Die neuen Mittel enthalten als Komponente (b), d.h. als eine der beiden obligatorischen verdickenden Tensidbestandteile nichtionische Tenside vom Typ der alkoxylierten Fettamine, welche vorzugsweise der Formel (I) folgen,

R¹-NH(CH₂CHR²O)ₙH (I)

in der R¹ für einen linearen oder verzweigten Alkyl- und/oder Alkenylrest mit 6 bis 22, vorzugsweise 12 bis 18 Kohlenstoffatomen, R² für Wasserstoff oder eine Methylgruppe und n für Zahlen von 1 bis 50, vorzugsweise 5 bis 30 und insbesondere 10 bis 20 steht. Typische Beispiele sind Anlagerungsprodukte von 1 bis 50, vorzugsweise 5 bis 30 Mol Ethylenoxid und/oder 1 bis 5 und insbesondere 2 bis 3 Mol Propylenoxid an primäre Amine mit 6 bis 22 Kohlenstoffatomen, wie beispielsweise Capronylamin, Caprinylamin, Caprylamin, Laurylamin, Myristylamin, Cetylamin, Stearylamin und Behenylamin sowie deren Gemische.

### Alkylsulfate

Als Komponente (c) und damit als zweite obligatorische Tensidkomponente enthalten die erfindungsgemäßen Zubereitungen Alkylsulfate, die vorzugsweise der Formel (II) folgen,

R³OSO₃X (II)

in der R³ für einen linearen oder verzweigten Allyl- und/oder Alkenylrest mit 6 bis 22, vorzugsweise 8 bis 10 Kohlenstoffatomen und X für Alkali, Erdalkali, Ammonium, Alkylammonium, Alkanolammonium oder Glucammonium steht. Typische Beispiele sind die Natrium-, Kalium-, Ammonium- und Triethanolammoniumsalze von Sulfatierungsprodukten der folgenden primären Fett- oder Oxoalkohole: Capronalkohol, Caprylalkohol, 2-Ethylhexylalkohol, Caprinalkohol, Laurylalkohol, Isotridecylalkohol, Myristylalkohol, Cetylalkohol, Palmoleylalkohol, Stearylalkohol, IsostearylallcohoI, Oleylalkohol, Elaidylalkohol, Petroselinylalkohol, Linolylalkohol, Linolenylalkohol, Elaeostearylalkohol, Arachylalkohol, Gadoleylalkohol, Behenylalkohol, Erucylalkohol und Brassidylalkohol sowie deren technische Mischungen. Vorzugsweise werden die Sulfate des 2-Ethylhexalkohols eingesetzt, wobei diese schon in vergleichsweise sehr kleinen Mengen einen stabilisierenden und co-verdickenden Effekt aufweisen.

### Aminoxide

In einer bevorzugten Ausführungsform der vorliegenden Erfindung enthalten die Mittel neben den alkoxylierten Fettaminen und Alkylsulfaten weitere chlorstabile Tenside, vorzugsweise vom Typ der Aminoxide. Aminoxide, die als fakultative Komponente (d) in Betracht kommen, stellen bekannte Stoffe dar, die gelegentlich den kationischen, in der Regel jedoch den nichtionischen Tensiden zugerechnet werden. Zu ihrer Herstellung geht man von tertiären Fettaminen aus, die üblicherweise entweder einen langen und zwei kurze oder zwei lange und einen kurzen Alkylrest aufweisen, und oxidiert sie in Gegenwart von Wasserstoffperoxid. Die im Sinne der Erfindung in Betracht kommenden Aminoxide folgen üblicherweise der Formel (III),

R⁴R⁵R⁶-N->O (III)

in der R⁴, R⁵ und R⁶ unabhängig von einander für lineare oder verzweigte Alkyl- und/oder Alkenylreste mit 6 bis 22 Kohlstoffatomen stehen. Vorzugsweise werden Aminoxide der Formel (III) eingesetzt, in der R⁴ und R⁵ für C_{12/14}- bzw. C_{12/18}-Kokosalkylreste stehen und R⁶ einen Methyl- oder einen Hydroxyethylrest bedeutet. Ebenfalls bevorzugt sind Aminoxide der Formel (III), in denen R⁴ für einen C_{12/14}- bzw. C_{12/18}- Kokosalkylrest steht und R⁵ und R⁶ die Bedeutung eines Methyl- oder Hydroxyethylrestes haben.

### Organische Phosphonsäuren

In einer weiteren bevorzugten Ausführungsform der Erfindung können die Mittel als fakultative Komponente (e) organische Phosphonsäuren oder deren Salze enthalten. Unter Phosphonsäuren werden organische Derivate der Säure EP(O)(OH)₂ verstanden; Phosphonate stellen die Salze und Ester dieser Phosphonsäuren dar. Die vorzugsweise in Betracht kommenden organischen Phosphonsäuren bzw. Phosphonate stellen bekannte chemische Verbindungen dar, die sich beispielsweise über den Weg der Michaelis-Arbuzov-Reaktion herstellen lassen. Typische Beispiele sind gegebenenfalls hydroxy-, nitrilo- und/oder aminosubstituierte Phosphonsäuren wie etwa Ethylphosphonsäure, Nitrilotris(methylen-phosphonsäure), 1-Amino- bzw. 1-Hydroxyalkan-1,1-diphosphonsäuren; Etidronsäure ist beispielsweise unter der Marke Turpinal® SL, Aminotris-(methylenphosphonsäure) unter der Marke Turpinal® D2 (Cognis) im Handel erhältlich. Aminoxidphosphonsäuren stellen Builder bzw. Sequestrierungsmittel dar, die beispielsweise von der Firma Bozetto/IT unter der Marke Sequion® vertrieben werden. Zu ihrer Herstellung geht man von Aminophosphonsäuren aus, die zum Aminoxid umgesetzt werden. Im Sinne der Erfindung können sowohl Mono- als auch Diaminoxide in Form der Phosphonsäuren bzw. deren Salze eingesetzt werden; vorzugsweise gelangen Aminoxide auf Basis von Aminotrimethylenphosphonsäure zum Einsatz.

### Wässrige Peroxidlösungen

In einer weiteren bevorzugten Ausführungsform können die wässrigen Peroxidlösungen die Komponenten in den nachfolgenden Mengen enthalten:
(a) 10 bis 30, vorzugsweise 15 bis 25 Gew.-% Wasserstoffperoxid
(b) 2 bis 5, vorzugsweise 1 bis 4 Gew.-% alkoxylierte Fettamine
(c) 0,1 bis 1, vorzugsweise 0,3 bis 0,7 Gew.-% Alkylsulfate
(d) 0 bis 5, vorzugsweise 1 bis 4 Gew.-% Aminoxide
(e) 0 bis 5, vorzugsweise 1 bis 4 Gew.-% organische Phosphonsäuren oder deren Salze
mit der Maßgabe, dass sich die Mengenangaben mit Wasser und gegebenenfalls weiteren Hilfs- und Zusatzstoffen zu 100 Gew.-% ergänzen. Üblicherweise besitzen die Mittel einen nicht-wässrigen Anteil von 15 bis 40 und vorzugsweise 20 bis 30 Gew.-% aufweisen. Es handelt sich in der Regel um stark saure Zubereitungen, die einen pH-Wert im Bereich von 1 bis 2 aufweisen.

### Hilfs- und Zusatzstoffe

Als Hilfs- und Zusatzstoffe können die verdickten Peroxidlösungen weitere peroxidstabile Tenside bzw. Hydrotrope enthalten, wie etwa Alkylethersulfate, Alkyl(ether)phosphate, Alkylsulfonate, Alkylbenzolsulfonate, Xylolsulfonate, Sarkosinate, Tauride, Isethionate, Sulfosuccinate, Ethercarbonsäuren, Betaine, Zuckerester und Alkyloligoglykoside. Vorzugsweise macht die Summe dieser zusätzlichen Tenside höchstens 10 Gew.-% der Gesamtmenge an Tensiden in der Rezeptur aus. Darüber hinaus können die Mittel peroxidstabile Duftstoffe, optische Aufheller, Farbstoffe und Pigmente in Mengen von insgesamt 0,01 bis 0,5 Gew.%-bezogen auf die Mittel - enthalten. Zu den als peroxidbeständig bekannten Duftstoffen zählen beispielsweise monocyclische und bicyclische Monoterpenalkohote sowie deren Ester mit Essig- oder Propionsäure (z.B. Isoborneal, Dihydroterpenöl, Isobornylacetat, Dihydroterpenylacetat). Bei den optischen Aufhellern kann es sich beispielsweise um das Kalisalz der 4,4'-bis-(1,2,3-Triazolyl)-(2-)-Stilbin-2,2-sulfonsäure handeln, das unter der Markenbezeichnung Phorwite® BHC 766 vertrieben wird. Als Farbpigmente kommen u.a. grüne Chlorophthalocyanine (Pigmosol® Green, Hostaphine® Green) oder gelbes Solar Yellow BG 300 (Sandoz) in Frage. Die Herstellung der erfindungsgemäßen Mittel erfolgt mittels Umrühren. Gegebenenfalls kann das erhaltene Produkt zur Abtrennung von Fremdkörpern und/oder Agglomeraten dekantiert oder filtriert werden.

### Gewerbliche Anwendbarkeit

Die neuen wässrigen Peroxidlösungen weisen eine ausreichende, jedoch nicht zu hohe Viskosität auf und können daher als im Sinne weiterer Gegenstände der Erfindung als Reinigungsmittel für harte Oberflächen oder Bleichmittel für Textilien und Fasern eingesetzt werden. Ein letzter Gegenstand der Erfindung betrifft die Verwendung von Gemischen aus alkoxylierten Fettaminen und Alkylsulfaten als Verdickungsmittel für wässrige Wasserstoffperoxidzubereitungen, wobei diese Gemische optional noch Alkylsulfate und/oder organische Phosphonsäuren oder deren Salze enthalten können. Die Einsatzmenge der Gemische kann 1 bis 10, vorzugsweise 2 bis 8 und insbesondere 3 bis 6 Gew.-% - bezogen auf die Endformulierung - betragen.

### Beispiele

### Beispiel 1, Vergleichsbeispiele V1 bis V4

Wasserstoffperoxidzubereitungen wurden mit unterschiedlichen Tensidmischungen verdickt. Viskosität, Stabilität und äußeres Erscheinungsbild wurden nach einer Lagerung von 4 Wochen bei 5, 20 bzw. 40 °C beurteilt. Die Viskosität wurde nach der Brookfield-Methode (Spindel 1,100 Upm) bestimmt und das Erscheinungsbild hingegen optisch beurteilt Die Ergebnisse sind in Tabelle 1 zusammengefasst Beispiel 1 ist erfindungsgemäß, die Beispiele V1 bis V4 dienen zum Vergleich.

**Tabelle 1**

| Zusammensetzung und Viskosität verdickter Peroxidlösungen | | | | | |
|---|---|---|---|---|---|
| **Zusammensetzung** | **1** | **V1** | **V2** | **V3** | **V4** |
| Wasserstoffperoxid, 30 Gew.-%ig | 81,2 | 81,2 | 81,2 | 81,2 | 81,2 |
| C_{12/18}-Kokosamin+10EO | 3,6 | - | - | 3,6 | 4,0 |
| Bis-stearylhydroxyethylaminoxid | 2,0 | 3,6 | 5,6 | 2,0 | 2,0 |
| 2-Ethylhexylsulfat-Natriumsalz | 0,4 | 0,4 | 0,4 | - | - |
| Etidronsäure | 3,3 | 3,3 | 3,3 | 3,3 | 3,3 |
| EDTA | 0,1 | 0,1 | 0,1 | 0,1 | 0,1 |
| Parfümöl | 0,1 | 0,1 | 0,1 | 0,1 | 0,1 |
| Wasser | ad 100 | | | | |

| **Viskosität nach 4 Wochen Lagerzeit [mPas]** | | | | | |
|---|---|---|---|---|---|
| - bei 5 °C | 160 | 100 | 110 | 120 | 120 |
| - bei 20 °C | 320 | 250 | 260 | 280 | 280 |
| - bei 40 °C | 182 | - | - | - | - |

| **Erscheinungsbild nach 4 Wochen Lagerzeit** | | | | | |
|---|---|---|---|---|---|
| - bei 5 °C | transp. | opak | opak | opak | opak |
| - bei 20 °C | transp. | transp. | transp. | transp. | transp. |
| - bei 40 °C | transp. | opak | opak | opak | opak |

### Diskussion der Ergebnisse:

○ Im Sinne der Erfindung werden verdickte Wasserstoffperoxidzubereitungen erhalten, die sich über die gesamte Lagerzeit als stabil und transparent erweisen und im Temperaturbereich von 5 bis 40 °C eine Viskosität nach Brookfield (Spindel 1, 100 Upm) von wenigstens 150 mPs aufweisen.
○ Ein Vergleich der erfindungsgemäßen Rezeptur des Beispiels 1 mit dem Vergleichsbeispiel V1, welches keine alkoxylierten Fettamine enthält, zeigt, dass das Viskositätsniveau nicht erreicht wird. Die Vergleichsrezeptur trübt sowohl bei niedrigen als auch höheren Lagertemperaturen ein.
○ Die Vergleichrezeptur V2 enthält ebenfalls keine Ethoxylate, der Gesamttensidgehalt ist aber genauso hoch wie in Beispiel 1, was jedoch nur zu einem inkrementellen Anstieg der Viskosität führt.
○ Die Vergleichsrezeptur V3 verzichtet im Gegensatz zu Beispiel 1 auf den Gehalt an Alkylsulfat. Die Viskosität liegt zwar etwas höher als bei den Vergleichsbeispielen V1 und V2, jedoch immer noch deutlich unter dem Niveau des Beispiels 1. Bei hohen und niedrigen Temperaturen sind die Formulierungen wieder trübe.
○ Die Vergleichsrezeptur V4 schließlich enthält ebenfalls kein Alkylsulfat, aber der Gesamttensidgehalt ist wiederum so hoch wie in Beispiel 1. Gegenüber V3 ist jedoch kein Unterschied festzustellen.

## Patentansprüche

1. Verdickte wässrige Peroxidlösungen, enthaltend
(a) Wasserstoffperoxid,
(b) alkoxylierte Fettamine und
(c) Alkylsulfate.

2. Mittel nach Anspruch 1, **dadurch gekennzeichnet, dass** sie im Temperaturbereich von 5 bis 40 °C eine Viskosität nach Brookfield (Spindel 1, 100 Upm) von 150 bis 500 mPas aufweisen.

3. Mittel nach Anspruch 2, **dadurch gekennzeichnet, dass** sie die Viskosität von 150 bis 500 mPs über einen Lagerzeitraum von wenigstens 4 Wochen aufweisen.

4. Mittel nach mindestens einem der Ansprüche 1 bis 3, **dadurch gekennzeichnet, dass** sie transparent sind.

5. Mittel nach mindestens einem der Ansprüche 1 bis 4, **dadurch gekennzeichnet, dass** sie als Komponente (b) alkoxylierte Fettamine der Formel (I) enthalten,
R¹-NH(CH₂CHR²O)ₙH (I)
in der R¹ für einen linearen oder verzweigten Alkyl- und/oder Alkenylrest mit 6 bis 22 Kohlenstoffatomen, R² für Wasserstoff oder eine Methylgruppe und n für Zahlen von 1 bis 50 steht.

6. Mittel nach mindestens einem der Ansprüche 1 bis 5, **dadurch gekennzeichnet, dass** sie als Komponente (c) Alkylsulfate der Formel (II) enthalten,
R³OSO₃X (II)
in der R³ für einen linearen oder verzweigten Alkyl- und/oder Alkenylrest mit 6 bis 22 Kohlenstoffatomen und X für Alkali, Erdalkali, Ammonium, Alkylammonium, Alkanolammonium oder Glucammonium steht.

7. Mittel nach Anspruch 6, **dadurch gekennzeichnet, dass** sie Alkylsulfate der Formel (III) enthalten, in der R³ für einen 2-Ethylhexylrest steht.

8. Mittel nach mindesten einem der Ansprüche 1 bis 7, **dadurch gekennzeichnet, dass** sie als weitere Komponente (d) Aminoxide enthalten.

9. Mittel nach Anspruch 8, **dadurch gekennzeichnet, dass** sie als Komponente (d) Aminoxide der Formel (III) enthalten,
R⁴R⁵R⁶-N->O (III)
in der R⁴, R⁵ und R⁶ unabhängig von einander für lineare oder verzweigte Alkyl- und/oder Alkenylreste mit 6 bis 22 Kohlstoffatomen stehen.

10. Mittel nach mindestens einem der Ansprüche 1 bis 9, **dadurch gekennzeichnet**, das sie als weitere Komponente (e) organische Phosphonsäuren oder deren Salze enthalten.

11. Mittel nach mindestens einem der Ansprüche 1 bis 10, **dadurch gekennzeichnet, dass** sie
(a) 10 bis 30 Gew:-% Wasserstoffperoxid
(b) 2 bis 5 Gew.-% alkoxylierte Fettamine
(c) 0,1 bis 1 Gew.-% Alkylsulfate
(d) 0 bis 5 Ges.-% Aminoxide
(e) 0 bis 5 Gew.-% organische Phosphonsäuren oder deren Salze
mit der Maßgabe enthalten, dass sich die Mengenangaben mit Wasser und gegebenenfalls weiteren Hilfs- und Zusatzstoffen zu 100 Gew.-% ergänzen.

12. Mittel nach mindestens einem der Ansprüche 1 bis 11, **dadurch gekennzeichnet, dass** sie einen nicht-wässrigen Anteil von 15 bis 40 Gew:-% aufweisen.

13. Mittel nach mindestens einem der Ansprüche 1 bis 12, **dadurch gekennzeichnet, dass** sie einen pH-Wert im Bereich von 1 bis 2 aufweisen.

14. Verwendung von verdickten wässrigen Peroxidlösungen nach Anspruch 1 zur Reinigung harter Oberflächen.

15. Verwendung von verdickten wässrigen Peroxidlösungen nach Anspruch 1 zur Bleiche von Textilien und Fasern.

16. Verwendung von Gemischen aus alkoxylierten Fettaminen und Alkylsulfaten als Verdickungsmittel für wässrige Wasserstoffperoxidzubereitungen.

17. Verwendung nach Anspruch 16, **dadurch gekennzeichnet, dass** die Gemische weiterhin Alkylsulfate und/oder organische Phosphonsäuren oder deren Salze enthalten.

18. Verwendung nach den Ansprüchen 16 und/oder 17, **dadurch gekennzeichnet, dass** man die Gemische in Mengen von 1 bis 10 Gew.-% - bezogen auf die Endformulierung - einsetzt.

## Claims

1. Thickened aqueous peroxide solutions comprising
(a) hydrogen peroxide,
(b) alkoxylated fatty amines and
(c) alkyl sulphates.

2. Compositions according to Claim 1, **characterized in that**, in the temperature range of 5 to 40°C, they have a viscosity in accordance with Brookfield (spindle 1, 100 rpm) of from 150 to 500 mPa.s.

3. Compositions according to Claim 2, **characterized in that** they have the viscosity of from 150 to 500 mPa.s over a storage period of at least 4 weeks.

4. Compositions according to at least one of Claims 1 to 3, **characterized in that** they are transparent.

5. Compositions according to at least one of Claims 1 to 4, **characterized in that** they comprise, as component (b), alkoxylated fatty amines of the formula (I),
R¹-NH(CH₂CHR²O)ₘH (I)
in which R¹ is a linear or branched alkyl and/or alkenyl radical having 6 to 22 carbon atoms, R² is hydrogen or a methyl group and n is numbers from 1 to 50.

6. Compositions according to at least one of Claims 1 to 5, **characterized in that** they comprise, as component (c), alkyl sulphates of the formula (II)
R³OSO₃X (II)
in which R³ is a linear or branched alkyl and/or alkenyl radical having 6 to 22 carbon atoms and X is alkali metal, alkaline earth metal, ammonium, alkylammonium, alkanolammonium or glucammonium.

7. Compositions according to Claim 6, **characterized in that** they comprise alkyl sulphates of the formula (III) in which R³ is a 2-ethylhexyl radical.

8. Compositions according to at least one of Claims 1 to 7, **characterized in that** they comprise amine oxides as further component (d).

9. Compositions according to Claim 8, **characterized in that** they comprise, as component (d), amine oxides of the formula (III),
R⁴R⁵R⁶-N->O (III)
in which R⁴, R⁵ and R⁶, independently of one another, are linear or branched alkyl and/or alkenyl radicals having 6 to 22 carbon atoms.

10. Compositions according to at least one of Claims 1 to 9, **characterized in that** they comprise, as further component (e), organic phosphonic acids or salts thereof.

11. Compositions according to at least one of Claims 1 to 10, **characterized in that** they comprise
(a) 10 to 30% by weight of hydrogen peroxide
(b) 2 to 5% by weight of alkoxylated fatty amines
(c) 0.1 to 1% by weight of alkyl sulphates
(d) 0 to 5% by weight of amine oxides
(e) 0 to 5% by weight of organic phosphonic acids or salts thereof
with the proviso that the quantitative data with water and optionally further auxiliaries and additives add up to 100% by weight.

12. Compositions according to at least one of Claims 1 to 11, **characterized in that** they have a nonaqueous fraction of from 15 to 40% by weight.

13. Compositions according to at least one of Claims 1 to 12, **characterized in that** they have a pH in the range from 1 to 2.

14. Use of thickened aqueous peroxide solutions according to Claim 1 for the cleaning of hard surfaces.

15. Use of thickened aqueous peroxide solutions according to Claim 1 for the bleaching of textiles and fibres.

16. Use of mixtures of alkoxylated fatty amines and alkyl sulphates as thickeners for aqueous hydrogen peroxide preparations.

17. Use according to Claim 16, **characterized in that** the mixtures furthermore comprise alkyl sulphates and/or organic phosphonic acids or salts thereof.

18. Use according to Claims 16 and/or 17, **characterized in that** the mixtures are used in amounts of from 1 to 10% by weight - based on the end formulation.

## Revendications

1. Solutions aqueuses de peroxyde épaissies, contenant
(a) du peroxyde d'hydrogène,
(b) des amines grasses alcoxylées et
(c) des alkylsulfates.

2. Compositions selon la revendication 1, **caractérisées en ce que** dans la plage de température de 5 à 40 °C elles présentent une viscosité selon Brookfield (broche 1, 100 tours/min) de 150 à 500 mPa.s.

3. Compositions selon la revendication 2, **caractérisées en ce qu'**elles présentent la viscosité de 150 à 500 mPa.s pendant une période de stockage d'au moins 4 semaines.

4. Compositions selon au moins l'une des revendications 1 à 3, **caractérisées en ce qu'**elles sont transparentes.

5. Compositions selon au moins l'une des revendications 1 à 4, **caractérisées en ce qu'**elles contiennent en tant que composant (b) des amines grasses alcoxylées de formule (I),
R¹-NH(CH₂CHR²O)ₙH (I)
dans laquelle R¹ représente un radical alkyle et/ou alcényle linéaire ou ramifié ayant de 6 à 22 atomes de carbone, R² représente un atome d'hydrogène ou un groupe méthyle et n représente des nombres allant de 1 à 50.

6. Compositions selon au moins l'une des revendications 1 à 5, **caractérisées en ce qu'**elles contiennent comme composant (c) des alkylsulfates de formule (II),
R³OSO₃X (II)
dans laquelle R³ représente un radical alkyle et/ou alcényle linéaire ou ramifié ayant de 6 à 22 atomes de carbone et X représente un ion de métal alcalin, métal alcalino-terreux, ammonium, alkylammonium, alcanolammonium ou glucammonium.

7. Compositions selon la revendication 6, **caractérisées en ce qu'**elles contiennent des alkylsulfates de formule (III), dans laquelle R³ représente un radical 2-éthylhexyle.

8. Compositions selon au moins l'une des revendications 1 à 7, **caractérisées en ce qu'**elles contiennent comme autre composant (d) des oxydes d'amines.

9. Compositions selon la revendication 8, **caractérisées en ce qu'**elles contiennent en tant que composant (d) des oxydes d'amines de formule (III)
R⁴R⁵R⁶-N->O (III)
dans laquelle R⁴, R⁵ et R⁶ représentent, chacun indépendamment, des radicaux alkyle et/ou alcényle linéaires ou ramifiés ayant de 6 à 22 atomes de carbone.

10. Compositions selon au moins l'une des revendications 1 à 9, **caractérisées en ce qu'**elles contiennent comme autres composant (e) des acides phosphoniques organiques ou leurs sels.

11. Compositions selon au moins l'une des revendications 1 à 10, **caractérisées en ce qu'**elles contiennent
(a) 10 à 30 % en poids de peroxyde d'hydrogène,
(b) 2 à 5 % en poids d'amines grasses alcoxylées
(c) 0,1 à 1 % en poids d'alkylsulfates.
(d) 0 à 5 % en poids d'oxydes d'amines
(e) 0 à 5 % en poids d'acides phosphoniques organiques ou de leurs sels
étant entendu que les proportions sont complétées à 100 % en poids avec de l'eau et éventuellement d'autres adjuvants et additifs.

12. Compositions selon au moins l'une des revendications 1 à 11, **caractérisées en ce qu'**elles présentent une fraction non aqueuse de 15 à 40 % en poids.

13. Compositions selon au moins l'une des revendications 1 à 12, **caractérisées en ce qu'**elles présentent un pH dans l'intervalle de 1 à 2.

14. Utilisation de solutions aqueuses de peroxyde épaissies selon la revendication 1, pour le nettoyage de surfaces dures.

15. Utilisation de solutions aqueuses de peroxyde épaissies selon la revendication 1, pour le blanchiment de textiles et de fibres.

16. Utilisation de mélanges d'amines grasses alcoxylées et d'alkylsulfates en tant qu'épaississant pour des préparations aqueuses de peroxyde d'hydrogène.

17. Utilisation selon la revendication 16, **caractérisée en ce que** les mélanges contiennent en outre des alkylsulfates et/ou des acides phosphoniques organiques ou leurs sels.

18. Utilisation selon la revendication 16 et/ou la revendication 17, **caractérisée en ce qu'**on utilise les mélanges en quantités de 1 à 10 % en poids, par rapport à la composition finale.
